# EUROPEAN PATENT APPLICATION

(11) **EP 4 556 452 A1**
(43) Date of publication of application: **21.05.2025**
(21) Application number: 23209747.7
(22) Date of filing: 14.11.2023
(51) Int. Cl.: C05D 9/02, C05F 5/00, A23G 1/48

(54) **PROCESSES OF PRODUCING CACAO FRUITS, CACAO BEANS, CACAO MASS, AND CACAO POWDER WITH AN INCREASED SELENIUM CONTENT**

(71) Applicant: Gene Active GmbH, 4422 Arisdorf (CH)
(72) Inventor: Schäfer, Prof. Dr. Rolf, 4422 Arisdorf (CH); Lisa, Blümel, 18057 Rostock (DE)
(74) Representative: Braunpat AG

(57) **Abstract**

The present invention refers to processes of producing cacao fruits, cacao beans, cacao mass, and cacao powder with an increased selenium content, whereby an aqueous fertilizer comprising selenium yeast is used for the cacao plants, as well as to their products.

## Description

### Technical field of the invention

The present invention refers to processes of producing cacao fruits, cacao beans, cacao mass, and cacao powder with an increased selenium content, whereby an aqueous fertilizer comprising selenium yeast is used for the cacao plants.

### Prior art

Until now plants have not been treated with selenium yeast to increase their selenium content. In contrast to inorganic selenium salts such as ammonium selenite, sodium selenite, potassium selenite and the corresponding selenates, the selenium yeast does not harm the soil.

### Detailed description of the invention

The present invention is directed to a process for producing cacao seeds with an enhanced selenium content, the process comprising:
(a) cultivating a cacao tree;
(b) fertilizing the cacao tree with an aqueous fertilizer comprising selenium yeast;
(c) waiting until one or more cacao pods are ready for harvest;
(d) harvesting one more cacao pods; and
(e) isolating cacao seeds from the one or more harvested cacao pods.

The single steps are described in more detail below.

### Step a)

The cacao tree is especially cultivated for a period in the range of three to six years.

### Step b)

The cacao tree is preferably fertilized with the aqueous fertilizer comprising selenium yeast for a total period of four to six months, preferably for a total period of five months. In a preferred embodiment of the present invention the treatment with the fertilizer is carried out for a total period of four to six months, especially five months, whereby the treatment is not carried out within four to six or five consecutive months, but there are breaks between some months of treatment. Especially, the treatment with the fertilizer is carried out for a total period of five months, whereby after the treatment in the first two months a break of one month is taken and whereby after the treatment in the consecutive month another second break of one month is taken. That means the preferred fertilizing scheme is as follows: Two months of treatment, one month of break, one month of treatment, one month of break, two months of treatment. In the months of break no treatment with the aqueous fertilizer comprising selenium yeast takes place. In a further preferred embodiment of the process of the present invention in every month of treatment two treatments take place with a break in the range of 1-2 weeks in between.

Preferably, the cacao tree is treated with the aqueous fertilizer in an amount in the range of 5 to 10 liters, more preferably in an amount in the range of 6.5 to 8.5 liters, even more preferably in an amount in the range of 7 to 8 liters, most preferably in an amount of around 7.5 liters.

This aqueous fertilizer comprises selenium yeast especially in an amount in the range of 5 to 30 weight-%, preferably in an amount in the range of 10 to 20 weight-%, more preferably in an amount in the range of 12 to 18 weight-%, even more preferably in an amount in the range of 14 to 16 weight-%, most preferably in an amount of around 15 weight-%, based on the total weight of the aqueous fertilizer.

The selenium yeast may be produced by any process known to the person skilled in the art. Usually, selenium yeast is produced using the microorganism Saccharomyces cerevisiae, better known as baker's yeast or brewer's yeast which is prepared in the first step of the manufacturing process. Alternatively, *Yarrowia lipolytica* may be used. Proliferation of the yeast is then continued using culture media comprising nutrient sources commonly employed in fermentation processes. The culture conditions (i.e. temperature, aeration, pH, speed of mixing) are continuously monitored. The main fermentation step is carried out in the presence of a selenium source such as e.g. an inorganic selenite salt and/or an inorganic selenate salt. Examples of inorganic selenite salts are M₂SeO₃ and MeSeO₃, whereby M is an alkali metal salt or ammonium and Me is an earth alkali metal salt. Examples of such selenite salts are sodium selenite, kalium selenite, calcium selenite, magnesium selenite and ammonium selenite. Examples of inorganic selenate salts are M₂SeO₄ and MeSeO₄, whereby M is an alkali metal salt or ammonium and Me is an earth alkali metal salt. Examples of such selenate salts are sodium selenate, kalium selenate, calcium selenate, magnesium selenate and ammonium selenate. Lithium and/or sodium selenite are preferably used. After reaching a certain concentration of yeast dry matter, the selenium yeast, i.e., the yeast enriched with selenium, is harvested, i.e. centrifuged, rinsed with water, and centrifuged again in order to remove remnant culture medium. Thereafter, the selenium yeast biomass is dried and used as such.

In addition to the selenium yeast, the aqueous fertilizer preferably comprises a source of sodium, a source of potassium, a source of calcium, a source of magnesium, a source of phosphor, a source of sulfur and a source of nitrogen as already known to the person skilled in the art.

Preferred examples of sources of sodium are inorganic sodium salts such as e.g. sodium sulfate.

Preferred examples of sources of sulfur are inorganic sulfur salts such as e.g. ammonium, alkali metal or earth alkali metal sulfates such as e.g. sodium sulfate.

Preferred examples of sources of potassium are inorganic potassium salts such as e.g. potassium chloride.

Preferred examples of sources of calcium are inorganic calcium salts such as e.g. calcium acetate.

Preferred examples of sources of magnesium are inorganic magnesium salts such as e.g. magnesium chloride.

Preferred examples of sources of phosphor are ammonium, alkali metal or earth alkali metal dihydrogen phosphates, hydrogen phosphates and phosphates, as well as any mixture thereof, such as e.g. sodium phosphate, ammonium dihydrogen phosphate and diammonium hydrogen phosphate.

Preferred examples of sources of nitrogen are ammonium salts such as e.g. ammonium sulfate and ammonium nitrate and any of their mixtures; ammonium salts mixed with calcium carbonate such as e.g. ammonium nitrate mixed with calcium carbonate; alkali metal nitrates such as e.g. potassium nitrate; earth alkali metal nitrates such as e.g. calcium nitrate; calcium cyanamide, possibly mixed with carbon; urea and any mixtures thereof.

The aqueous fertilizer comprises preferably sodium phosphate in an amount in the range of 5 to 15 weight-%, preferably in an amount in the range of 7 to 9 weight-%, and/or magnesium chloride in an amount in the range of 1 to 5 weight-%, preferably in an amount in the range of 2 to 4 weight-%, and/or potassium chloride in an amount in the range of 3 to 9 weight-%, preferably in an amount in the range of 5 to 7 weight-%, and/or calcium acetate in an amount in the range of 1 to 5 weight-%, preferably in an amount in the range of 2 to 4 weight-%, and/or ammonium nitrate in an amount in the range of 4 to 10 weight-%, preferably in an amount in the range of 6 to 8 weight-%,and/or sodium sulfate in an amount in the range of 3 to 9 weight-%, preferably in an amount in the range of 5 to 7 weight-%,all amounts based on the total weight of the aqueous fertilizer.

### Step c)

After the last treatment with the aqueous fertilizer it is waited for 2-3 months until the cacao pods are ready for harvest.

### Steps d) and e)

Steps d) and e) are carried out according to processes known to the person skilled in the art.

The present invention is also directed to a process for producing a cacao mass with an enhanced selenium content, the process comprising the steps:
(i) carrying out the process for producing cacao seeds with an enhanced selenium content as described above; and
(ii) preparing a cacao mass from the cacao seeds obtained in step (e).

Step ii) is carried out according to processes known to the person skilled in the art.

Furthermore, the present invention is directed to a process for producing a chocolate with an enhanced selenium content, the process comprising the steps:
(A) carrying out the process for producing a cacao mass with an enhanced selenium content as described above; and
(B) preparing a chocolate using the cacao mass obtained in step (ii).

### Steps A) and B) are carried out according to processes known to the person skilled in the art.

The cacao mass as well as the chocolate produced by the processes as described above have preferably a selenium content in the range of 10 µg/g to 18 µg/g, more preferably they have a selenium content in the range of 11 µg/g to 17 µg/g, even more preferably they have a selenium content in the range of 13 µg/g to 17 µg/g, most preferably they have a selenium content in the range of 14 µg/g to 16 µg/g, whereby the chocolate does preferably not comprise calcium carbonate.

### Examples

### Example 1: Cultivating cacao plants

The Cocoa plant is a small (4 to 8 m height) evergreen tree. In Peru, it is mainly cultivated in the valleys mainly as intercrop with Coconut. Our area under cultivation is being promoted by Swiss chocolate producing companies as contract farming; i.e. ELLY SWISS AG selected farmers which have contracts under the label FAIR TRADE COCOA (SPK cocoa).

Cocoa is the dried and fully fermented fatty seed of the cacao tree from which chocolate is made. "Cocoa" can often also refer to the drink commonly known as hot chocolate; cocoa powder, the dry powder made by grinding cocoa seeds and removing the cocoa butter from the dark, bitter cocoa solids; or it may refer to the combination of both cocoa powder and cocoa butter together. Cocoa can be grown up to 500 m above mean sea level. It requires a minimum of 90-100 mm rainfall per month with an annual rainfall of 1500-2000 mm. The plants need equitable climate with well distributed rainfall. If dry periods are prolonged, irrigation scheduling is necessary. The temperature range of 15°-39°C with optimum of 25°C is considered ideal. Cocoa requires deep and well drained soils. Poorly drained soil affects growth of plants. Majority of area under Cocoa cultivation is on clay loam and sandy loam soil. It grows well in the pH range of 6.5 to 7.0. Cocoa requires 100 g of nitrogen (supplied in the form of 220 g of urea), 40 g of P₂O₅ (supplied in the form of 200 g of rock phosphate) and 140 g of K₂O (supplied in the form of 235 g of muriate of potash) per year.

### Example 2: Producing selenium yeast

Selenium yeast is produced using the microorganism Saccharomyces cerevisiae, better known as baker's yeast or brewer's yeast. The yeast is cultured in a medium enriched with lithium selenite, whereby it absorbs the selenite and converts it into the form of selenium that naturally occurs in food, selenomethionine.

### Example 3: Producing cacao seeds and cacao powder with increased selenium content

Cacao plants are cultivated as described in example 1. Twice a month in March, April, June, August and September each cacao tree is treated each time with 7.5 liters of fertilizer. The fertilizer is an aqueous solution containing 8 weight-% of sodium phosphate, 3 weight-% of magnesium chloride, 6 weight-% of potassium chloride, 3 weight-% of calcium acetate, 7 weight-% of ammonium nitrate, 6 weight-% of sodium sulfate and 15 weight-% of selenium yeast, all amounts based on the total weight of the aqueous fertilizer.

The ripe fruits are harvested and processed to cacao powder and delivered to ELLY SWISS AG Switzerland. The selenium content is determined using graphite furnace atomic absorption spectrometry.

### Example 4: Results

The cacao powder obtained from plants fertilized with selenium yeast contained 15 µg/g of selenium. It will, thus, be ideal to manufacture 5 g chocolate platelets containing 75 µg of selenium.

The chocolate obtained from the cacao powder contained 54% cocoa butter (triglycerides), lipids, 11.5 % proteins, 9% cellulose, 7.5% starch, and pentosanes, 6% tannins, colours, 5% water, 2.6% minerals and salts, 2% organic acids and taste compounds, 1.% sugars, 1.2% theobromine and 0.2% caffeine, an ideal emulsifier for hydrophilic and hydrophobic active ingredients at low to moderate concentrations (µg to mg).

## Claims

1. A process for producing cacao seeds with an enhanced selenium content, the process comprising:
(a) cultivating a cacao tree;
(b) fertilizing the cacao tree with an aqueous fertilizer comprising selenium yeast;
(c) waiting until one or more cacao pods are ready for harvest;
(d) harvesting one more cacao pods; and
(e) isolating cacao seeds from the one or more harvested cacao pods.

2. The process according to claim 1, whereby the aqueous fertilizer comprises selenium yeast in an amount in the range of 5 to 30 weight-%, preferably in an amount in the range of 10 to 20 weight-%, more preferably in an amount in the range of 12 to 18 weight-%, based on the total weight of the aqueous fertilizer.

3. The process according to claim 1 and/or claim 2, whereby the aqueous fertilizer comprises a source of sodium, and/or a source of potassium, and/or a source of calcium, and/or a source of magnesium, and/or a source of phosphor, and/or a source of sulfur and/or a source of nitrogen, preferably the aqueous fertilizer comprises a source of sodium, a source of potassium, a source of calcium, a source of magnesium, a source of phosphor, a source of sulfur and a source of nitrogen.

4. The process according to claim 3, whereby the source of sodium is selected from inorganic sodium salts, and/or the source of potassium is selected from inorganic potassium salts, and/or the source of calcium is selected from inorganic calcium salts, and/or the source of magnesium is selected from inorganic magnesium salts, and/or the source of phosphor is selected from ammonium, alkali metal or earth alkali metal dihydrogen phosphates, hydrogen phosphates and phosphates, as well as any mixture thereof, and/or the source of sulfur is selected from inorganic sulfur salts, preferably from ammonium, alkali metal or earth alkali metal sulfates, and/or the source of nitrogen is selected from ammonium salts, possibly mixed with calcium carbonate; alkali metal nitrates; earth alkali metal nitrates; calcium cyanamide, possibly mixed with carbon; urea and any mixtures thereof.

5. The process according to any one or more of the preceding claims, whereby the aqueous fertilizer comprises sodium phosphate in an amount in the range of 5 to 15 weight-%, preferably in an amount in the range of 7 to 9 weight-%, and/or magnesium chloride in an amount in the range of 1 to 5 weight-%, preferably in an amount in the range of 2 to 4 weight-%, and/or potassium chloride in an amount in the range of 3 to 9 weight-%, preferably in an amount in the range of 5 to 7 weight-%, and/or calcium acetate in an amount in the range of 1 to 5 weight-%, preferably in an amount in the range of 2 to 4 weight-%, and/or ammonium nitrate in an amount in the range of 4 to 10 weight-%, preferably in an amount in the range of 6 to 8 weight-%,and/or sodium sulfate in an amount in the range of 3 to 9 weight-%, preferably in an amount in the range of 5 to 7 weight-%,all amounts based on the total weight of the aqueous fertilizer.

6. The process according to any one or more of the preceding claims, whereby in step b) the cacao tree is treated twice a month for a total of five months with the aqueous fertilizer, preferably in an amount of 5 to 10 liters.

7. A process for producing a cacao mass with an enhanced selenium content, the process comprising the steps:
(i) carrying out the process according to any one or more of claims 1 to 6; and
(ii) preparing a cacao mass from the cacao seeds obtained in step (e).

8. A process for producing a chocolate with an enhanced selenium content, the process comprising the steps:
(A) carrying out the process according to claim 7; and
(B) preparing a chocolate using the cacao mass obtained in step (ii).

9. A cacao mass produced by the process according to claim 7, whereby the cacao mass has a selenium content in the range of 10 µg/g to 18 µg/g, preferably it has a selenium content in the range between of 11 µg/g to 17 µg/g, more preferably it has a selenium content in the range between of 13 µg/g to 17 µg/g, most preferably it has a selenium content in the range between of 14 µg/g to 16 µg/g.

10. A chocolate produced by the process according to claim 8, whereby the chocolate has a selenium content in the range of 10 µg/g to 18 µg/g, preferably it has a selenium content in the range between of 11 µg/g to 17 µg/g, more preferably it has a selenium content in the range between of 13 µg/g to 17 µg/g, most preferably it has a selenium content in the range between of 14 µg/g to 16 µg/g, whereby the chocolate does preferably not comprise calcium carbonate.
